(19) Europäisches Patentamt
European Patent Office
Office européen des brevets

(11) **EP 1 001 412 A2**

(12) **EUROPEAN PATENT APPLICATION**

(43) Date of publication:
**17.05.2000 Bulletin 2000/20**

(51) Int. Cl.[7]: **G11B 7/09**

(21) Application number: **99122326.4**

(22) Date of filing: **09.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **12.11.1998 JP 32235598**

(71) Applicant:
**ALPS ELECTRIC CO., LTD.**
**Ota-ku Tokyo 145 (JP)**

(72) Inventors:
• **Masaru, Arai**
**Iwanuma-shi, Miyagi-ken (JP)**
• **Yasuaki, Kameyama**
**Furukawa-shi, Miyagi-ken (JP)**
• **Mitsunori, Sakashita**
**Furukawa-shi, Miyagi-ken (JP)**

(74) Representative:
**Klunker . Schmitt-Nilson . Hirsch**
**Winzererstrasse 106**
**80797 München (DE)**

(54) **Optical disk apparatus having correcting means of minimizing offset amount of tracking error signal**

(57) The optical disk apparatus comprises: an optical head for reading information recorded on an optical disk; reproduction signal generating means for generating an RF signal and a TE signal from the recorded information read by the optical head; servo means for generating a tracking drive signal based on the TE signal and controlling the position of the optical head by the tracking drive signal; jitter detecting means for detecting a jitter amount in the RF signal; and offset amount adjusting means for adjusting an offset amount of the TE signal on the basis of the jitter amount. The offset amount adjusting means generates an offset amount adjusting signal which minimizes the jitter amount detected by the jitter detecting means and the servo means generates a tracking drive signal whose offset amount is corrected on the basis of the offset amount adjusting signal.

FIG. 1

## Description

BACKGROUND OF THE INVENTION

Field of the Invention

The present invention relates to an optical disk apparatus and, more particularly, to an optical disk apparatus having correcting means for minimizing an offset amount of a tracking error (TE) signal included in information recorded on an optical disk read by an optical head.

Description of the Related Art

Generally, a known optical disk apparatus for reproducing information recorded on an optical disk medium such as a DVD-ROM reads information recorded on the optical disk medium by an optical head and allows a pit reproduction (RF) signal (signal in which a clock signal and data mixedly exist) to be generated from the read recorded information by information reproducing means. In order to extract the data from the pit RF signal, an internal reference clock signal whose phase and frequency are synchronized with those of the pit RF signal by a phase-locked loop (PLL) is generated, a window signal is formed from the internal reference clock signal by window signal generating means, and the data in the pit RF signal is extracted by using the window signal.

On an optical disk medium used for a known optical disk apparatus, recording information is recorded in the form of a very small indentation (pit). The pits are sequentially arranged in a pit train (track) in the circumferential direction of the optical disk medium. The recorded information is read by an optical head in such a manner that a laser beam emitted from semiconductor laser light or the like is focused by a focus lens or the like onto a pit as a light spot and reflection light reflected from each pit is read.

Further, in the known optical disk apparatus, a tracking control for allowing the position of a light spot formed on the optical disk medium to accurately follow a predetermined track is performed. The tracking control is usually performed by supplying a tracking error (TE) signal to servo means. In this case, although various TE signal forming means are known, there is a phase difference system (DPD system) as a representative means. The method is disclosed in, for example, Japanese Unexamined Patent Application Nos. 10-69654, 10-97725, 10-112042, and the like. The DPD system is comprised of four photoreceptor cells obtained by splitting the optical head in two each in the vertical and lateral directions, light reflected from the optical disk medium is detected by the four photoreceptor cells, electric signals are outputted from the four photoreceptor cells, respectively, two sets of electric signals are formed by adding the electric signals outputted from the photoreceptor cells in diagonal positions in the obtained four electric signals, and a TE signal is formed from a phase difference between the two sets of electric signals.

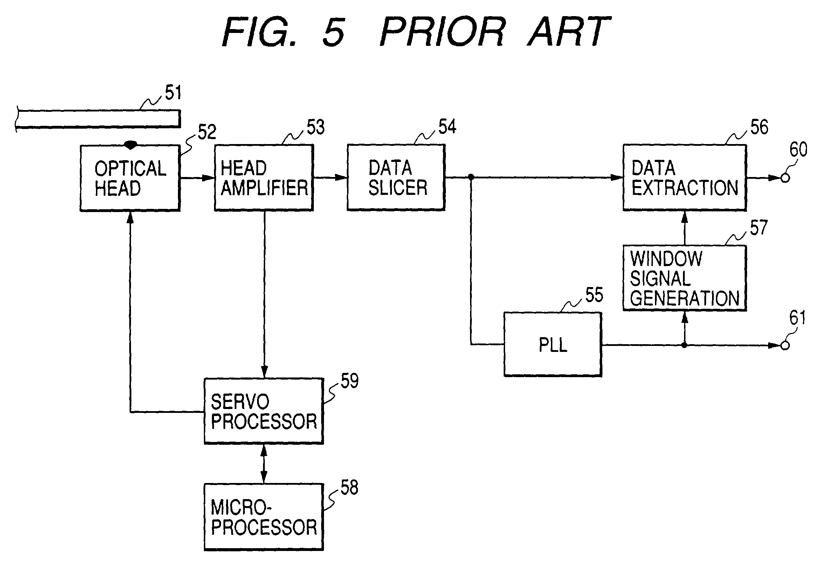

Fig. 5 is a block diagram showing an example of the configuration of a known optical disk apparatus. Only the main configuration part of the optical disk apparatus is extracted and illustrated.

As shown in Fig. 5, a known optical disk apparatus comprises: an optical disk medium 51 to be placed on a rotary drive plate (not shown); an optical head 52 which can be moved to a predetermined position along the radial direction in a state where it is positioned close to the disk surface of the optical disk medium 51; a head amplifier 53 for receiving information recorded on the optical disk medium 51 read by the optical head 52 and generating a pit RF signal and a TE signal; a data slicer 54 for slicing an analog pit RF signal so as to be converted to a digital pit RF signal; a PLL 55 for generating an internal reference clock signal whose frequency and phase are synchronized with those of the digital pit RF signal; a data extracting unit 56 for extracting data from the digital pit RF signal; a window signal generating unit 57 for converting the internal reference clock signal into an window signal; a microprocessor 58 for controlling the units of the optical disk apparatus; a servo processor 59 for moving the optical head 52 to a predetermined position in response to the TE signal; a data output terminal 60; and an internal reference clock signal terminal 61.

In the optical disk apparatus having the configuration, when the optical disk medium 51 is rotated, the optical head 52 reads the information recorded on the optical disk medium 51 and generates an electric signal corresponding to the read information, and the head amplifier 53 processes the electric signal to thereby generate the analog pit RF signal and TE signal. The data slicer 54 slices the analog pit RF signal to thereby convert the signal into a digital pit RF signal. The PLL 54 receives the digital pit RF signal and generates an internal reference clock signal whose frequency and phase are synchronized with those of the digital pit RF signal. The window signal generator 57 receives the internal reference clock signal and generates a window signal. The data extracting unit 56 receives the digital pit RF signal and the window signal and extracts data in the digital pit RF signal by using the window signal. The servo processor 59 receives the TE signal, generates a tracking signal under the control of the microprocessor 58, and adjusts the position of the optical head 52 by the tracking drive signal, thereby performing a required tracking control.

According to the known optical disk apparatus, by executing the tracking control using the TE signal, the position of the light spot is allowed to accurately follow a predetermined track. By the influence of a tilt of the optical disk medium placed on the optical disk apparatus, fluctuation in the shape and depth of a number of pits formed in the optical disk medium, birefringence in the optical disk medium, a slight movement of an objective lens which focuses the laser beam, and the like, an offset change occurs in the TE signal. The offset change in the TE signal can be corrected by using an offset amount adjusting signal.

The inventors of the present invention, however, have found that an error rate of the pit RF signal relates to the jitter amount in the pit RF signal and cannot be sufficiently reduced only by correcting the above-mentioned offset change in the TE signal.

Since the error rate of the pit RF signal cannot be sufficiently reduced as described above, the known optical disk apparatus has a problem such that a pit RE signal in a good condition cannot be always obtained.

## SUMMARY OF THE INVENTION

The invention is to solve the problem and its object is to provide an optical disk apparatus capable of obtaining a pit RE signal in a good condition by correcting an offset amount of a tracking error signal by using an offset amount adjusting signal which minimizes a jitter amount in a pit reproduction signal.

In order to achieve the object, an optical disk apparatus of the invention comprises: an optical head for reading information recorded on an optical disk; reproduction signal generating means for generating a pit reproduction (RF) signal and a tracking error (TE) signal from the recorded information read by the optical head; servo means for controlling the position of the optical head by a tracking drive signal generated based on the TE signal; jitter detecting means for detecting a jitter amount in the pit RF signal; and offset amount adjusting means for adjusting an offset amount of the tracking error signal on the basis of the jitter amount. The apparatus has means for allowing the offset amount adjusting means to generate an offset amount adjusting signal which minimizes the jitter amount supplied from the jitter detection signal and allows the servo means to generate the tracking drive signal for correcting the offset amount of the TE signal on the basis of the offset amount adjusting signal.

According the means, there are provided the jitter detecting means for detecting the jitter amount in the pit RF signal and the offset amount adjusting means for generating the offset amount adjusting signal which minimizes the jitter amount, the offset amount adjusting means is allowed to generate the offset amount adjusting signal which minimizes the jitter amount, and the servo means is allowed to generate the tracking drive signal for correcting the offset amount of the TE signal on the basis of the offset amount adjusting signal, thereby performing predetermined tracking correction. Consequently, the offset amount of the TE signal outputted from the reproduction signal generating means is adjusted so as to be an optimum value and the condition of the pit RE signal can be always made preferable.

## BRIEF DESCRIPTION OF DRAWINGS

Fig. 1 is a block diagram showing a schematic configuration of an embodiment of an optical disk apparatus according to the invention.
Fig. 2 is a flowchart showing a determining process to minimize a jitter amount executed by an offset amount adjusting unit in the embodiment shown in Fig. 1.
Figs. 3A and 3B are characteristics diagrams each showing the relation between a tracking offset and a jitter amount.
Fig. 4 is a characteristics diagram showing the state of an error rate of a digital pit RF signal in an optical disk apparatus of the embodiment.
Fig. 5 is a block diagram showing an example of the configuration of a known optical disk apparatus.

## DESCRIPTION OF THE PREFERRED EMBODIMENTS

An embodiment of the invention will be described hereinbelow with reference to the drawings.

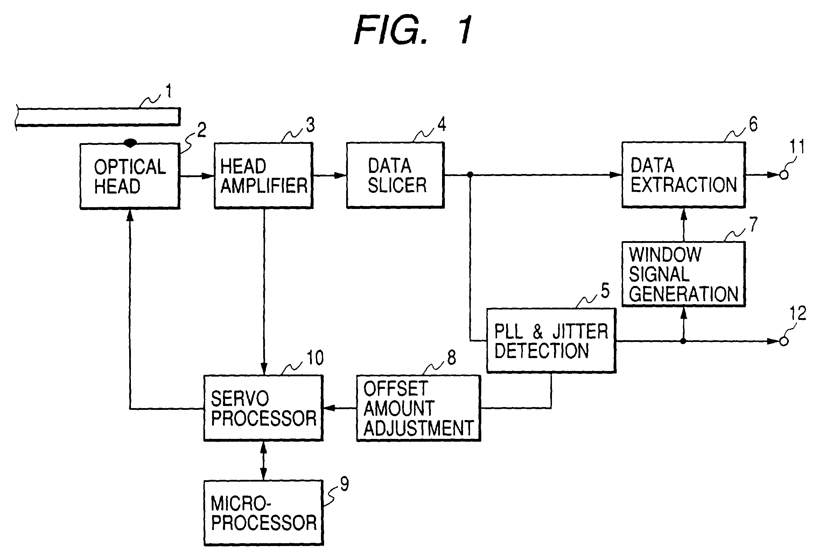

Fig. 1 is a block diagram showing a schematic configuration of an embodiment of an optical disk apparatus according to the invention.

Referring to Fig. 1, in the optical disk apparatus according to the embodiment, an optical disk medium 1 in which recording information is formed by a number of pits and the pits are arranged along tracks is placed on a turn table and is rotated. The optical disk apparatus comprises: an optical head 2 which is movable to a predetermined position along the radial direction in a state where the optical head 2 is positioned close to the disk surface of the optical disk medium 1, reads information recorded on the optical disk medium 1 and outputs a read signal as an electric signal; a head amplifier (reproduction signal generating means) 3 for processing the electric signal outputted from the optical head 2 and generating an analog pit reproduction (RF) signal (signal in which a clock signal and data mixedly exist) and a tracking error (TE) signal; a data slicer 4 for slicing the analog pit RF signal outputted from the head amplifier 3 at a predetermined level and generating a digital pit RF signal; a phase-locked loop (PLL) and jitter detecting unit (jitter detecting means) 5 for receiving the digital pit RF signal outputted from the data slicer 4, generating an internal reference clock signal whose frequency and phase are synchronized with those of the digital pit RF signal, and detecting a jitter amount in the digital pit RF signal; a data extracting unit 6 for receiving the digital pit RF signal and extracting only data from the digital pit RF signal by using a window signal supplied from a window signal generator 7 which will be described later; the window signal generator 7 for receiving the internal reference clock signal outputted from the PLL and jitter detecting unit 5 and generating a window signal for making the data extracting unit 6 enter a transmitting state at a timing when data arrives at the data extracting unit 6; an offset amount adjusting unit 8 (offset amount adjusting means) 8 for receiving the jitter amount outputted from the PLL and jitter detecting unit 5 and outputting an offset amount adjusting signal which minimizes the jitter amount; a microprocessor 9 for controlling the units of the optical disk apparatus in accordance with a predetermined program; a servo processor (servo means) 10 for receiving the TE signal and the offset amount adjusting signal and moving the optical head 2 to a predetermined position; a data output terminal 11 which is connected to a used circuit (not shown) and outputs the data extracted by the data extracting unit 6; and a clock signal output terminal 12 which is connected to a used circuit (not shown) and outputs the internal reference clock signal obtained by the PLL and jitter detecting unit 5.

In this case, the optical head 2 has four photoreceptor cells obtained by splitting the head in two each in the vertical and lateral directions. Reflection light obtained from the optical disk medium 1 is detected by the four photoreceptor cells and electric signals are outputted from the respective four photoreceptor cells. The head amplifier 3 generates two sets of electric signals by adding the electric signals outputted from the photoreceptor cells in the diagonal positions in the four electric signals obtained by the four photoreceptor cells of the optical head 2 and generates the TE signal from the phase difference between the two sets of electric signals. The PLL and jitter detecting unit 5 comprises a voltage control oscillator, a phase comparator, a loop filter, and the like and detects a phase comparison signal obtained from the phase comparator as a jitter amount.

The optical disk apparatus of the embodiment having the configuration operates, broadly, as follows.

When the optical disk medium 1 is loaded to the optical disk apparatus and is rotated, the optical head 2 reads the information recorded on the optical disk medium 1 and generates four electric signals corresponding to the read recorded information. The head amplifier 3 processes the four electric signals outputted from the optical head 2 and generates the analog pit RF signal and the TE signal. The data slicer 4 slices the analog pit RF signal outputted from the head amplifier 3 at a predetermined level, thereby converting the analog pit RF signal into a digital pit RF signal. The PLL and jitter detecting unit 5 receives the digital pit RF signal outputted from the data slicer 4 and generates an internal reference clock signal whose frequency and phase are synchronized with those of the digital pit RF signal. The window signal generator 7 receives the internal reference clock signal outputted from the PLL and jitter detecting unit 5 and generates a window signal which is maintained at the high level or low level for a predetermined period. The period of generating the window signal is selected so as to coincide with the period in which data in the digital pit RF signal sent to the data extracting unit 6 arrives. The data extracting unit 6 receives the digital pit RF signal outputted from the data slicer 4 and the window signal outputted from the window signal generator 7, extracts the data in the digital pit RF signal by using the window signal, and supplies the obtained data to the data output terminal 11.

The offset amount adjusting unit 8 receives the jitter amount (phase comparison signal) obtained by the PLL and jitter detecting unit 5, generates an offset amount adjusting signal which minimizes the supplied jitter amount, and supplies the signal to the servo processor 10. The servo processor 10 receives the TE signal outputted from the head amplifier 3 and the offset amount adjusting signal outputted from the offset amount adjusting unit 8 under the control of the microprocessor 9 and generates a tracking drive signal corresponding to the signals. The tracking drive signal is supplied to the optical head 2 to adjust the position of the optical head 2 with respect to the optical disk medium 1, thereby performing a required tracking control.

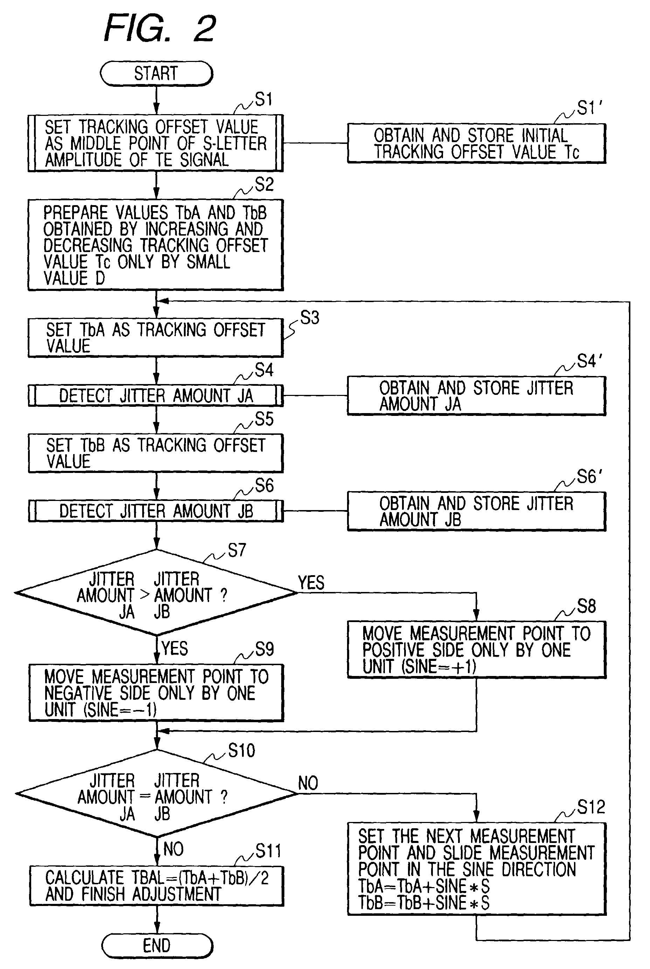

Fig. 2 is a flowchart showing a determining process to minimize the jitter amount, executed by the offset amount adjusting unit 8 in the embodiment shown in Fig. 1.

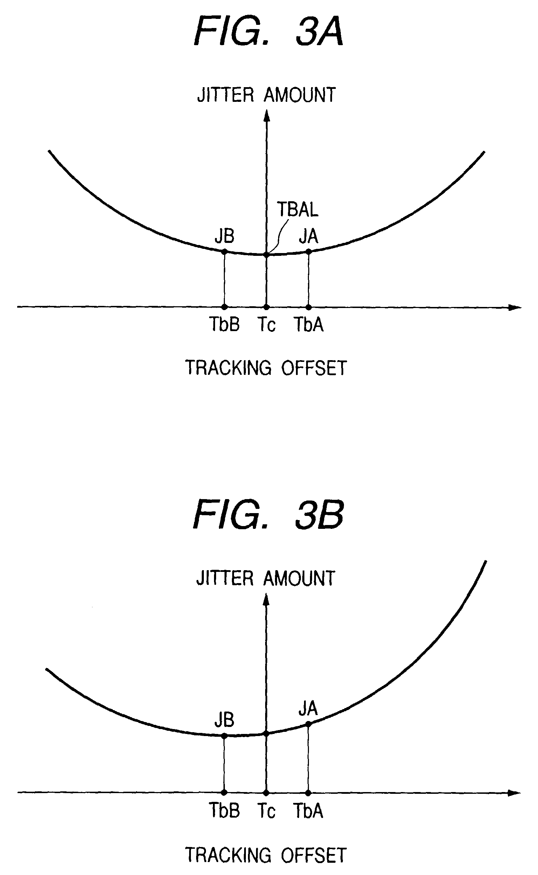

Figs. 3A and 3B are characteristic diagrams each showing the relation between the tracking offset and the jitter amount. Fig. 3A shows a state where the jitter amount JA and the jitter amount JB are equal to each other. Fig. 3B shows a state where the jitter amount JB is larger than the jitter amount JA.

The progress of the determination when the jitter amount is minimized will be described by using Figs. 2 and 3 as follows.

First, in step S1, the microprocessor 9 sets a tracking offset value as an amplitude middle point in the TE signal.

At this time, in step S1', the microprocessor 9 obtains a tracking offset value Tc set in step S1 and stores it into a built-in memory (not shown).

In step S2, as shown in Figs. 3A or 3B, the microprocessor 9 prepares two tracking offset values TbA and TbB obtained by increasing and decreasing the tracking offset value Tc only by a small value D.

In step S3, the microprocessor 9 sets TbA as the tracking offset value.

Subsequently, in step S4, the microprocessor 9 detects the jitter amount JA outputted from the PLL and jitter detecting unit 5 when the tracking offset value is set as TbA.

At this time, in step S4', the microprocessor 9 obtains the jitter amount JA detected in step S4 and stores it into the built-in memory.

In subsequent step S5, the microprocessor 9 sets TbB as the tracking offset value.

In step S6, the microprocessor 9 detects the jitter amount JB outputted from the PLL and jitter detecting unit 5 when TbB is set as the tracking offset value.

In step S6', the microprocessor 9 obtains the jitter amount JB detected in step S6 and stores it into the built-in memory.

In step S7, with respect to the two jitter amounts JA and JB which have been already obtained, the microprocessor 9 determines whether the jitter amount JA is larger than the jitter amount JB. When it is determined that the jitter amount JA is larger than the jitter amount JB (Y), the routine advances to step S8. On the other hand, when it is determined that the jitter amount JA is not larger than the jitter amount JB (N), the routine advances to the other step S9.

Subsequently, in step S8, the microprocessor 9 moves a measurement point in the positive direction only by one measurement unit ( sine = +1 ).

In step S9, the microprocessor 9 moves the measurement point in the negative direction only by one measurement unit ( sine = -1 ).

In subsequent step S10, the microprocessor 9 determines whether or not the jitter amount JA becomes equal to the jitter amount JB. When it is determined that the jitter amount JA and the jitter amount JB become equal to each other (Y), the relation between the tracking offset and the jitter amount is as shown in Fig. 3A. In this case, the routine advances to the next step S11. On the other hand, when it is determined that the jitter amounts JA and JB are not yet equal to each other (N), the relation between the tracking offset and the jitter amount is, for example, as shown in Fig. 3B. In this case, the routine advances to the other step S12.

In step S11, when the tracking offset is TBAL and the jitter amounts JA and JB become equal to each other, that is, when it is determined that the jitter amount is the minimum, the microprocessor 9 calculates TBAL = (TbA + TbB)/2 , stores it into the built-in memory, and finishes the series of flowchart.

In step S12, the microprocessor 9 sets the value TbA ( TbA = TbA + sine*S ) or TbB ( TbB = TbB + sine*S ) obtained by sliding the amplitude middle point in the TE signal in the sine direction in step S8 or S9 only by a constant value S for offset adjustment as the next measurement point. After that, the microprocessor 9 returns to step S3 and executes the operations of steps S3 to S12 again.

The series of operations are executed when the optical disk medium 1 is loaded to the optical disk apparatus. When the average jitter amount TBAL is obtained, it is stored in the built-in memory. After that, the servo processor 10 allows an offset amount adjusting signal based on the average jitter amount TBAL to be generated from the offset amount adjusting unit 8 and forms a tracking drive signal by using the offset amount adjusting signal until a new optical disk medium 1 is loaded.

When a new optical disk medium 1 is loaded to the optical disk apparatus, a new average jitter amount TBAL is obtained by executing the operations and is stored into the built-in memory. After that, the offset amount adjusting signal based on the new average jitter amount TBAL is generated and the tracking drive signal obtained by using the offset amount adjusting signal is formed.

As mentioned above, according to the embodiment, when the jitter amounts JA and JB become equal to each other, the average jitter amount TBAL of the jitter amounts JA and JB is housed in the built-in memory and, after that, the offset amount adjusting signal and the tracking drive signal are formed by using the stored average jitter amount TBAL. Consequently, the minimum jitter amount can be obtained from the average jitter amount TBAL and the error rate of the digital pit RF signal can be largely improved as compared with the error rate of the digital pit RF signal of a known apparatus of this kind.

Specifically, according to the optical disk apparatus of the embodiment, even if a change occurs in the original tracking offset due to occurrence of a small amount of tilt in the loaded optical disk medium 1, slight variation in the shape or depth of each pit formed in the optical disk medium 1, occurrence of the birefringence in an insulating film formed on the surface of the optical disk medium 1, slight movement of the objective lens, or the like, by setting the average jitter amount TBAL as described above and forming the offset amount adjusting signal based on the average jitter amount TBAL and the tracking drive signal using the offset amount adjusting signal, the error rate of the digital pit RF signal can be reduced. Thus, the digital pit RF signal whose quality does not deteriorate can be obtained.

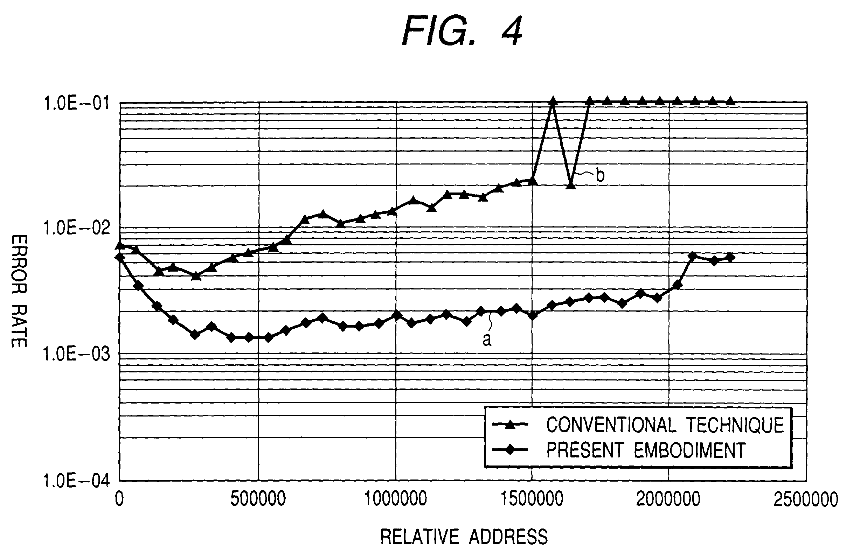

Fig. 4 is a characteristic diagram showing the state of the error rate of the digital pit RF signal in the optical disk apparatus of the embodiment, which also shows the state of the error rate of the digital pit RF signal in the known optical disk apparatus for comparison.

In Fig. 4, the vertical axis denotes the error rate, the lateral axis denotes a relative address, curve (a) indicates the characteristics of the embodiment, and curve (b) shows the characteristics of the known apparatus.

In this case, for example, when 100 bits are read from the optical disk medium loaded to the optical disk apparatus and one of the bits is erroneous, the numerical value indicative of the error rate is 1.0E - 02. Even if only one bit is erroneous in one byte (8 bits) data read from the optical disk medium, it is regarded as a byte error. For example, when there is an error of one byte in 100-byte data, the byte error rate is 1.0E - 02.

As shown by the curve (a) in Fig. 4, the error rate of the digital pit RF signal in the optical disk apparatus of the embodiment is generally lower than that of the digital pit RF signal in the known optical disk apparatus as shown by the curve (b) in Fig. 4. It is understood that the error rate is largely improved.

Although the case where the PLL and jitter detecting unit 5 is used to detect the jitter amount and an output of the phase comparator is used has been described in the foregoing embodiment, the jitter detecting unit of the invention is not limited to that using the PLL and jitter detecting unit 5. Although the configuration of the optical disk apparatus becomes slightly complicated, a jitter detecting unit may be separately provided.

The embodiment has been described by the example such that the average jitter amount TBAL obtained by reading the information recorded on the optical disk medium 1 is stored in the built-in memory when the optical disk medium 1 is loaded and the servo processor 10 forms both of the offset amount adjusting signal based on the average jitter amount TBAL and the tracking drive signal using the offset amount adjusting signal until a new optical disk medium 1 is loaded, that is, the servo processor 10 has the function of learning the average jitter amount TBAL. The servo processor 10 according to the invention is not always limited to that having such a learning function. It is also possible to always obtain the average jitter amount TBAL and form the offset amount adjusting signal based on the average jitter amount TBAL obtained at that time and the tracking drive signal using the offset amount adjusting signal.

As mentioned above, according to the invention, the jitter detecting means of detecting the jitter amount in the pit RF signal and the offset amount adjusting means of generating the offset amount adjusting signal which minimizes the jitter amount detected by the jitter detecting means are provided, the offset amount adjusting signal which minimizes the jitter amount is generated by the offset amount adjusting means, and the tracking drive signal for correcting the offset amount of the TE signal on the basis of the offset amount adjusting signal is generated by the servo means, thereby performing a predetermined tracking correction. Consequently, effects such that the offset amount of the TE signal outputted from the reproduction signal generating means is adjusted so as to be an optimum value and the state of the pit RE signal can be always made preferable are produced.

In this case, the measurement point of the jitter amount is increased and decreased only by the predetermined amount, the two jitter amounts JA and JB obtained by the operation are compared with each other, and it is determined that the jitter amount when the two jitter amounts JA and JB become equal to each other is the minimum jitter amount. Consequently, effects such that the offset amount of the TE signal can be promptly corrected and the error rate can be reduced are produced.

The PLL is used as jitter detecting means and the comparison output of the phase comparing means in the PLL is used as a jitter detection signal. Consequently, effects such that it is unnecessary to newly provide jitter detecting means and the configuration can be simplified as compared with a case where jitter detecting means is newly provided are produced.

**Claims**

1. An optical disk apparatus comprising: an optical head for reading information recorded on an optical disk when the optical disk placed is rotated; reproduction signal generating means for generating a pit reproduction signal and a tracking error signal on the basis of the recorded information read by the optical head; servo means for generating a tracking drive signal based on the tracking error signal and controlling the position of the optical head by the tracking drive signal; jitter detecting means for detecting a jitter amount in the pit reproduction signal; and offset amount adjusting means for adjusting an offset amount of the tracking error signal on the basis of the jitter amount, wherein the offset amount is adjusted so as to minimize the jitter amount.

2. An optical disk apparatus according to claim 1, wherein the offset amount adjusting means performs a comparison between two jitter amounts JA and JB obtained when the offset amount is increased and decreased only by a predetermined amount with respect to a jitter amount measurement point, and determines that the jitter amount at the measurement point when the two jitter amounts JA and JB are equal to each other is the minimum jitter amount.

3. An optical disk apparatus according to claim 1 or 2 wherein the jitter detecting means uses a phase-locked loop (PLL) for allowing the frequency of an internal reference clock signal to be synchronized with that of the pit reproduction signal and the jitter amount is a comparison output of phase comparing means of the phase-locked loop.

4. An optical disk apparatus according to claim 1,2 or 3, wherein the offset amount adjusting means updates an offset amount adjusting signal for minimizing the jitter amount each time information recorded on an optical disk which is newly placed is read and, after that, continues to output the same offset amount adjusting signal from the offset amount adjusting means during the optical disk is placed.

FIG. 1

EP 1 001 412 A2

# FIG. 2

START

S1
SET TRACKING OFFSET VALUE AS MIDDLE POINT OF S-LETTER AMPLITUDE OF TE SIGNAL

S1′
OBTAIN AND STORE INITIAL TRACKING OFFSET VALUE Tc

S2
PREPARE VALUES TbA AND TbB OBTAINED BY INCREASING AND DECREASING TRACKING OFFSET VALUE Tc ONLY BY SMALL VALUE D

S3
SET TbA AS TRACKING OFFSET VALUE

S4
DETECT JITTER AMOUNT JA

S4′
OBTAIN AND STORE JITTER AMOUNT JA

S5
SET TbB AS TRACKING OFFSET VALUE

S6
DETECT JITTER AMOUNT JB

S6′
OBTAIN AND STORE JITTER AMOUNT JB

S7
JITTER AMOUNT JA > JITTER AMOUNT JB ? — YES

S8
MOVE MEASUREMENT POINT TO POSITIVE SIDE ONLY BY ONE UNIT (SINE=+1)

YES

S9
MOVE MEASUREMENT POINT TO NEGATIVE SIDE ONLY BY ONE UNIT (SINE=−1)

S10
JITTER AMOUNT JA = JITTER AMOUNT JB ? — NO

S12
SET THE NEXT MEASUREMENT POINT AND SLIDE MEASUREMENT POINT IN THE SINE DIRECTION
TbA=TbA+SINE∗S
TbB=TbB+SINE∗S

NO

S11
CALCULATE TBAL=(TbA+TbB)/2 AND FINISH ADJUSTMENT

END

# FIG. 3A

JITTER AMOUNT

TBAL

JB · · JA

TbB  Tc  TbA

TRACKING OFFSET

# FIG. 3B

JITTER AMOUNT

JB  JA

TbB  Tc  TbA

TRACKING OFFSET

FIG. 4

FIG. 5 PRIOR ART